# EUROPEAN PATENT SPECIFICATION

(11) **EP 3 118 495 B1**
(45) Date of publication and mention of the grant of the patent: **02.01.2019**
(21) Application number: 15760703.7
(22) Date of filing: 09.03.2015
(51) Int. Cl.: F16K 5/12, F16K 11/074, E03C 1/10, F16K 11/085, E03C 1/04

(54) **MIXING TAP**
MISCHARMATUR
ROBINET MÉLANGEUR

(30) Priority: 14.03.2014 ES 201430351
(43) Date of publication of application: 18.01.2017
(73) Proprietor: Griferias Grober, S.L., 50197 Zaragoza (ES)
(72) Inventor: LADRÓN JIMÉNEZ, Roberto, E-50197 Zaragoza (ES)
(74) Representative: Schäfer, Matthias W.
(86) International application number: PCT/ES2015/070165
(87) International publication number: WO 2015/136134

(56) References cited:
- EP-A2- 2 381 040
- WO-A1-2009/047586
- CN-A- 103 267 144
- DE-A1- 3 621 659
- ES-A1- 2 517 965
- GB-A- 2 267 664
- KR-A- 20120 050 600
- US-A- 5 069 241

## Description

### Object of the Invention

The present description refers, as its title indicates, to a mixer tap of the type commonly used in showers, that has opening, closing and discharging functions, characterised in that it comprises an inlet chamber, a outlet chamber and a discharge hole, a cartridge with one inlet, two outlets and central closing that has opening, intermediate closing and closing/discharging functions, and a multi-position control lever, whereby the inlet chamber is connected to the cartridge inlet duct; the outlet chamber to the outlet duct from the cartridge to the shower head or hose; and the discharge hole to the cartridge discharge duct.

The object of the invention is to achieve the release of water retained in water pipes in a shower system, be it a shower column, flexible hose or internal or external pipe, of any type normally used to convey water towards a shower head, in order to prevent any uncontrolled discharge of water, dripping and proliferation of bacteria commonly generated in stagnant water, such as legionella, after the tap has been used.

### Background of the Invention

Currently, water pipes fitted on the taps of shower columns, shower heads, shower hoses and systems with embedded pipes have the drawback that when the water inflow is closed off, a small amount of water is retained in the pipes, which can subsequently cause the proliferation of bacteria and other microorganisms that develop quickly in the presence of a high degree of humidity.

Another drawback arising with shower heads is that water is retained inside them in equilibrium with atmospheric pressure; after a time, water discharges from the head and falls into the shower area, possibly causing a disturbance to users.

At present, there are devices on the market to eliminate water retained in sanitation circuits, specifically in shower pipes, such as, for example, the drain device that can be used on shower taps and suchlike presented in Spanish utility model U201030360, which describes a device consisting of at least one connector with at least one radial perforation. This connector is fitted on the connection between each of the intermediate pipes and the main body of the tap, while at the same time, that intermediate piping runs to a shower head, so that when the tap feeding the intermediate pipe and the shower head is turned off, the water retained inside the intermediate pipe drains passively through the radial perforation in the connector. The drawback is that the device is fitted into the sanitation circuit and thus creates undrained dead spots between the taps and the connectors intended to drain them.

WO 2009 / 047586 A1 discloses a mixer tap and a separat flow control device including a thermostate for allowing the flow of water only once a set temperature has been reached. The control device includes three positions, one open position which allows flow of water to the shower head. A first closed position in which the flow of water is deviated to a drain line until a desired water temperature has been reached. And a second closed/discharging position in which the shower hose or tube is connected to the drain line to avoid builing up of bacteria or similar in the shower hose or tube.

### Description of the Invention

The present invention is defined by a mixer tap having the features of claim 1.

In order to overcome the problem of the proliferation of retained water in water pipes, a mixer tap of the type commonly used in showers has been designed, which comprises an arrangement of the inner chambers, an inlet chamber, outlet chamber and discharge hole, in such a way that the use of a cartridge with one inlet, two outlets and central closing provides the functions of opening, intermediate closing and closing/discharging, controlled by a multi-position hand lever.

When the cartridge with this arrangement of the inner chambers is fitted into a mixer tap, the ducts in the cartridge, as activated by the control lever, change the way the water is distributed as follows:
Standard distribution in a cartridge:
- Inlet water duct
- Outlet 1
- Outlet 2

New distribution in a mixer tap with novel inner arrangement:
- Delivery to shower column/head or shower hose.
- Water inlet
- Discharge

As a result of the cartridge combining the functions of opening, intermediate closing and closing/discharging within a single mechanism, any residual water tends to evaporate quickly as the pipes come into contact with outside air through the discharge outlet.

### Delivery to shower column/head or shower hose

Opening: when the control lever is turned to the position indicated on the mixer tap casing or on the handle, the controlled flow of water (at the required temperature) directed at the user is fed progressively into the chambers in the tap connected to the water inlet duct in the cartridge, and is then diverted directly down the outlet duct to the shower column/head or shower hose.

Intermediate closing: when the control lever is moved back to its initial position, the controlled flow of water is cut off and water is retained in the shower column/head or hose, for example in situations when the user turns off the flow of water to apply soap.

Fully Closing/Discharging: when the control lever is moved in the opposite direction from when the shower is on, any water retained in the shower column/head or shower hose empties out by gravity through the discharge duct in the cartridge and runs out of the circuit through a discharge hole built into the mixer tap casing, for example in situations where the user turns off the flow of water completely.

The incorporation of a cartridge with one inlet, two outlets and central closing, positioned in the new arrangement of chambers in the mixer tap, ensures the opening and intermediate closing of the controlled water flow as well as the closing/discharging function, releasing water retained in the shower head or shower hose feed pipes, which in turn eliminates unwanted dripping and prevents the proliferation of bacteria commonly generated in stagnant water, such as legionella.

In any event, throughout this description, we shall refer to the two most common types of outlet (shower column/head and shower hose), but it can be applied to others, such as pipes to any other types of showers or embedded piping systems.

### Advantages of the invention

The mixer tap presented herein offers numerous advantages over currently available models, of which the most important is the new inner arrangement of the chambers - inlet chamber, outlet chamber and discharge hole - so that the use of a cartridge with one inlet, two outlets and central closing of the type commonly used in taps allows for the functions of opening, intermediate opening and closing/discharging, all controlled by a multi-position lever.

Another important advantage to be highlighted is that the new arrangement of chambers in the mixer tap changes the way a standard tap cartridge performs as follows:

| | |
|---|---|
| Water delivery to shower column/head or shower hose | previously: Water inlet |
| Water inlet | previously: Outlet 1 |
| Discharge | previously: Outlet 2 |

Another of the most important advantages is that, because the cartridge combines the functions of opening, intermediate closing and closing /discharging within a single mechanism, any residual water tends to evaporate quickly as it comes into contact with air via the outgoing duct through the discharge hole.

A further important advantage is that, with the opening function, the controlled water flow enters via the tap chambers connected to the inlet duct of the cartridge and, depending on the direction of rotation, is diverted directly towards the delivery outlet to the shower column/head or the shower hose.

Another important advantage derived from the previous one is that with the intermediate closing function, the inflow of water is closed and the water retained in the shower column/head or shower hose, depending on the direction of rotation.

Moreover, an additional significant advantage that stems from the previous ones, is that with the closing /discharging function, water retained in the shower column /head or shower hose is discharged by gravity through the outlet duct in the cartridge through a discharge hole arranged in the tap casing.

### Description of the figures

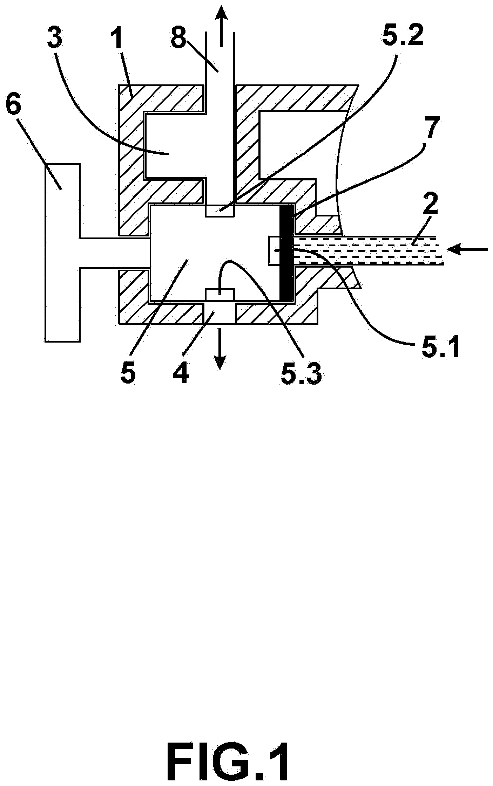

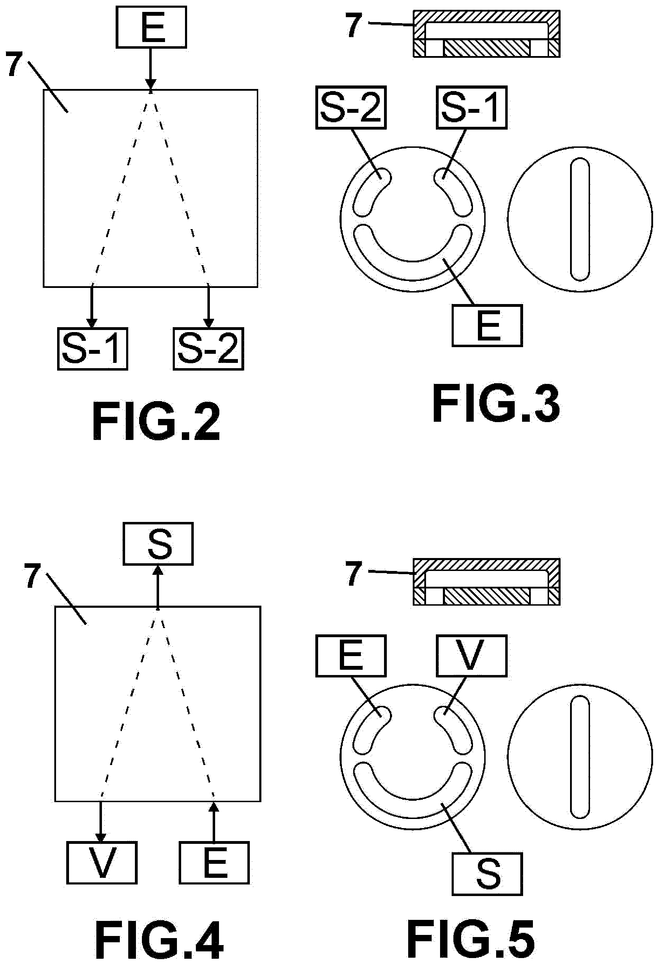

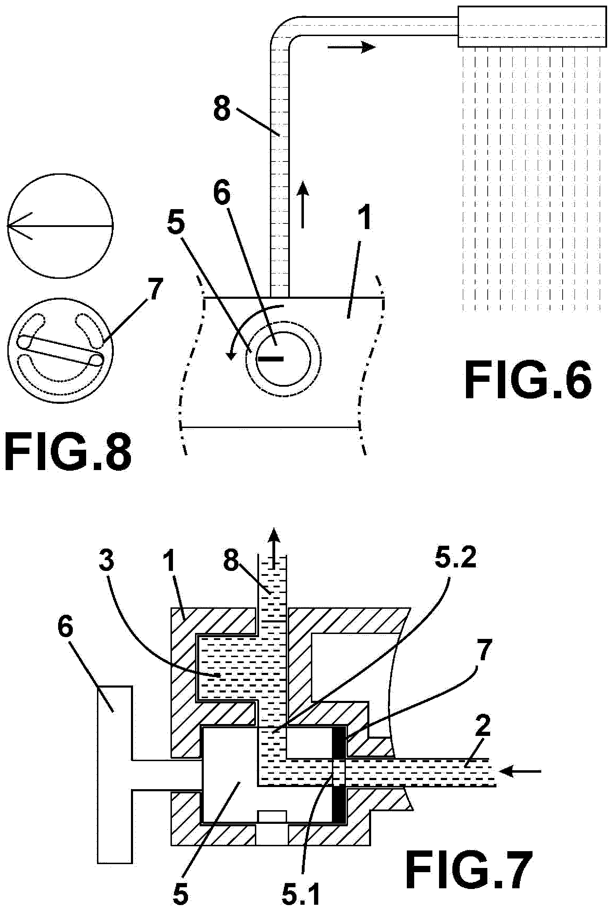

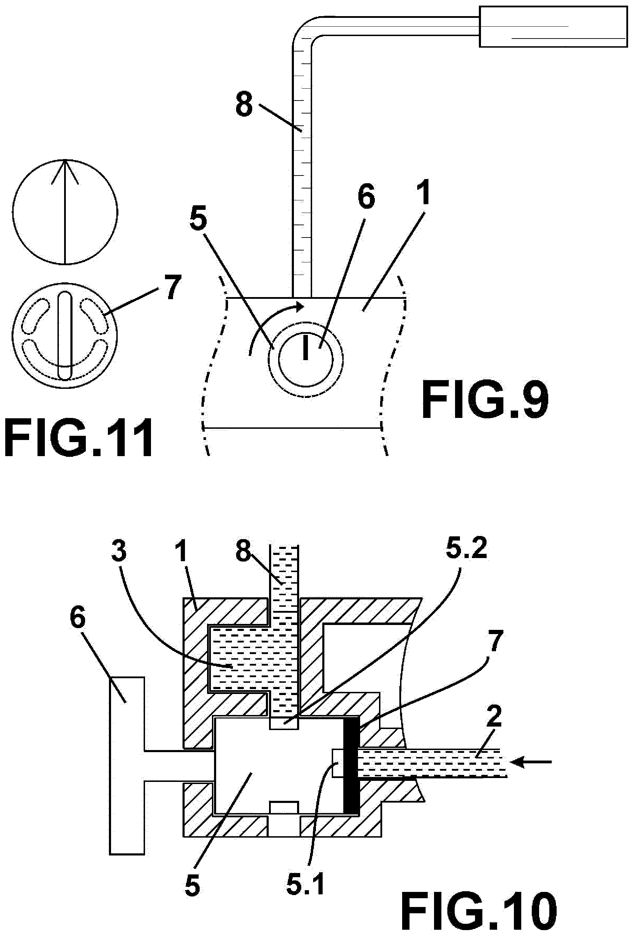

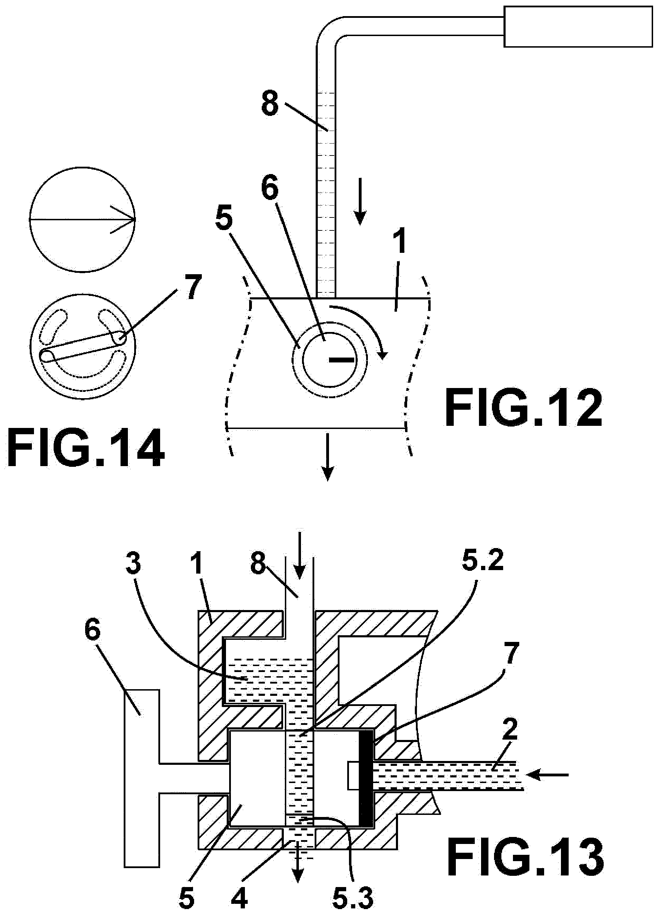

To provide a better understanding of this addition, a preferred practical embodiment of it is shown in the drawing attached.

In the afore-mentioned drawing,
Figure -1- shows a schematic sectional view of the mixer tap with the new inner chamber arrangement, inlet chamber, outlet chamber and discharge hole, using a cartridge with a single inlet, two outlets and central closing, which provides for the functions of opening, intermediate closing and closing/discharging, controlled by means of a multi-position hand lever.
Figure -2- shows a schematic view of the internal arrangement of the type of cartridge typically used in domestic taps, showing one inlet, (E) and two outlets, outlet 1 (S1) and outlet 2 (S2)
Figure -3- shows a schematic sectional view of the ceramic disk and construction details of the static and moving parts, showing an inlet (E) and two outlets, outlet 1 (S1) and outlet 2 (S2)
Figure -4- shows a schematic view of the new duct arrangement inside a cartridge that matches the new design of the chambers in a mixer tap, thus altering its functions, showing an inlet duct (E), an outlet duct (S) to the shower column/head or shower hose (previously: the water inlet), and the discharge duct (V)
Figure -5- shows a schematic sectional view of the ceramic disk and construction details of the static and moving parts, showing the new duct arrangement with one inlet (E), one outlet (S) and the discharge duct (V).
Figure -6- shows a schematic view of the mixer tap with the control lever at the opening position, which corresponds to water flowing into the shower column/head or shower hose.
Figure -7- shows a schematic sectional view of the mixer tap with the cartridge at the opening position, showing the inflowing water being delivered to the shower column /head or shower hose.
Figure -8- shows a schematic view of the direction of rotation of the control lever and a detailed view of the positioning of the ceramic disks when the lever is at the opening position with delivery to the shower column /head or shower hose.
Figure -9- shows a schematic view of the mixer tap with the control lever at the intermediate closing position, which corresponds to the cut-off and retention of water delivery to the shower column/head or shower hose.
Figure -10- shows a schematic sectional view of the mixer tap with the cartridge at the intermediate closing position, showing the inflowing water retained in the shower column/head or shower hose.
Figure -11- shows a schematic view of the direction of rotation of the control lever and a detailed view of the positioning of the ceramic disks when the lever and the flow of water towards the shower column/head or shower hose are at the intermediate closing position.
Figure -12- shows a schematic view of the mixer tap when the control lever is at the closing/discharging position, whereby the water retained both in the shower column and in the shower head pipes drains by gravity to the outside.
Figure -13- shows a schematic sectional view of the mixer tap with the cartridge in closing/discharging position, illustrating how the shower column and shower head pipe drain out by gravity, thus eliminating the possible build-up and proliferation of micro-organisms and Legionella bacteria.
Figure -14- shows a schematic view of the direction of rotation of the control lever and a detailed view of the positioning of the ceramic disks when the control lever and the flow of water towards the shower column/head or shower hose are at the closing/discharging position.

The graphic illustration of the perfected arrangement of a cartridge includes a control button, although any other type of standard control device that can be rotated left or right could equally have been depicted.

### Preferred Embodiment of the Invention

The mixer tap presented herein is **characterised** by the novel arrangement of the inner chambers, an inlet chamber (2), outlet chamber (3) and discharge hole (4), in such a way that the use of a cartridge with one inlet, two outlets and central closing enables the functions of opening, intermediate closing and closing/discharging, controlled by a multi-position lever (6).

The new arrangement of the chambers in the mixer tap (1) alters the arrangement of the ducts in the cartridge (5) in combination with the ceramic disks (7) to provide an inlet duct (5.1) (previously: outlet 1), an outlet duct (5.2) to the shower column /head or shower hose (previously: the water inlet), and the discharge duct (5.3) (previously: outlet 2)

### Outlet to shower column/head or shower hose:

Opening: when the control lever (6) is turned to the position indicated on the mixer tap (1) casing or on the control lever (6), the controlled flow of water (at the required temperature) is fed progressively into the chamber (2) in the tap (1), connecting to the water inlet duct (5.1) in the cartridge (5), and being delivered directly down the outlet duct (5.2) to the shower column /head (8) or shower hose.

Intermediate closing: when the control lever (6) is moved back to its initial position, the controlled flow of water is cut off and water is retained in the shower column /head (8) or shower hose.

Closing/Discharging: when the control lever (6) is moved in the opposite direction from when the shower is on, water retained in the shower column /head (8) or shower hose drains out by gravity through the discharge duct (5.3) in the cartridge (5) and runs to the outside through a discharge hole (4) built into the mixer tap (1) casing.

## Claims

1. A mixer tap of the type commonly used in showers, with opening, intermediate closing and closing/discharging functions, wherein it comprises an inlet chamber (2), a outlet chamber (3) and a discharge hole (4), a cartridge (5) with one inlet duct, one outlet duct and a discharge duct and central closing, with opening, intermediate closing and closing/discharging functions, and a multi-position control lever (6), in which the inlet chamber (2) is connectable to the inlet duct (5.1) in the cartridge; the outlet chamber (3) to the outlet duct (5.2) from the cartridge (5) to a shower column /head or shower hose; and the discharge hole (4) to the discharge duct (5.3) in the cartridge (5),
wherein when the control lever (6) sets the outlet duct to the shower column /head (8) or shower hose to the opening position corresponding to the opening function, the inlet chamber (2) is connected to the outlet chamber (3) via the inlet duct (5.1) and outlet duct (5.2) of the cartridge (5), wherein when the control lever (6) sets the outlet duct to the shower column /head (8) or hose to the intermediate closing position corresponding to the intermediate closing function, the connection between the inlet chamber (2) and the outlet chamber (3) is cut off, wherein the inflow of water to the inlet duct is cut off and water is retained in the shower colum/head or hose, wherein when the control lever (6) sets the outlet duct to the shower column /head (8) or hose to the closing/discharging position corresponding to the closing/discharging function, the discharge duct (5.3) in the cartridge is opened, so that the water retained in the shower column/head (8) or shower hose drains out through the discharge hole (4) built into the mixer tap (1) casing.

## Patentansprüche

1. Mischbatterie der Bauart, welche häufig in Duschen verwendet wird, mit Funktionen zum Öffnen, Zwischenschließen und Schließen/Entleeren, wobei sie eine Einlasskammer (2), eine Auslasskammer (3) und ein Auslaufloch (4), einen Einsatz (5) mit einem Einlasskanal, einem Auslasskanal und einem Auslaufkanal und zentralem Schließen mit Funktionen zum Öffnen, Zwischenschließen und Schließen/Entleeren und einen Steuerhebel (6) mit mehreren Stellungen aufweist, in denen die Einlasskammer (2) mit dem Einlasskanal (5.1) in der Patrone verbindbar ist; die Auslasskammer (3) mit dem Auslasskanal (5.2) aus dem Einsatz (5) zu einer/einem Duschsäule/-kopf oder Duschschlauch; und das Auslaufloch (4) mit dem Auslaufkanal (5.3) in dem Einsatz (5),
wobei, wenn der Steuerhebel (6) den Auslasskanal zu der/dem Duschsäule/-kopf (8) oder Duschschlauch in die offene Stellung bringt, welche der Funktion zum Öffnen entspricht, die Einlasskammer (2) über den Einlasskanal (5.1) und Auslasskanal (5.2) der Patrone (5) mit der Auslasskammer (3) verbunden wird, wobei, wenn der Steuerhebel (6) den Auslasskanal zu der/dem Duschsäule/-kopf (8) oder -schlauch in die Zwischenschließstellung bringt, welcher der Funktion zum Zwischenschließen entspricht, die Verbindung zwischen der Einlasskammer (2) und der Auslasskammer (3) unterbrochen ist, wobei der Zufluss von Wasser in den Einlasskanal unterbrochen ist und Wasser in der/dem Duschsäule/-kopf (8) oder -schlauch gehalten wird, wobei, wenn der Steuerhebel (6) den Auslasskanal zu der/dem Duschsäule/-kopf (8) oder -schlauch in die Schließ-/Entleerstellung bringt, welche der Funktion zum Schließen/Entleeren entspricht, der Auslaufkanal (5.3) in dem Einsatz geöffnet ist, so dass das in der/dem Duschsäule/-kopf (8) oder Duschschlauch gehaltene Wasser durch das Auslaufloch (4), welches in das Gehäuse der Mischbatterie eingebaut ist, abläuft.

## Revendications

1. Un robinet mitigeur du type de ceux utilisés habituellement pour les douches, avec des fonctions d'ouverture, de fermeture intermédiaire et de fermeture / vidange, étant précisé qu'il comprend une chambre d'entrée (2), une chambre de sortie (3) et un orifice de vidange (4), une cartouche (5) avec un conduit d'entrée, un conduit de sortie et un conduit de vidange, et une fermeture centrale, avec des fonctions d'ouverture, de fermeture intermédiaire et de fermeture / vidange, et un levier de commande multi-positions (6), dans lequel la chambre d'entrée (2) peut être raccordée au conduit d'entrée (5.1) dans la cartouche ; la chambre de sortie (3) peut être raccordée au conduit de sortie (5.2) de la cartouche (5) à une colonne / tête de douche ou un flexible de douche ; et l'orifice de vidange (4) peut être raccordé au conduit de vidange (5.3) dans la cartouche (5),
étant précisé que lorsque le levier de commande (6) règle le conduit de sortie sur la colonne / tête de douche (8) ou le flexible de douche sur la position d'ouverture correspondant à la fonction d'ouverture, la chambre d'entrée (2) est raccordée à la chambre de sortie (3) via le conduit d'entrée (5.1) et le conduit de sortie (5.2) de la cartouche (5), étant précisé que lorsque le levier de commande (6) règle le conduit de sortie sur la colonne / tête de douche (8) ou le flexible sur la position de fermeture intermédiaire correspondant à la fonction de fermeture intermédiaire, la connexion entre la chambre d'entrée (2) et la chambre de sortie (3) est coupée, étant précisé que le flux d'eau entrant dans le conduit d'entrée est coupé et l'eau est conservée dans la colonne / tête de douche (8) ou le flexible, étant précisé que lorsque le levier de commande (6) règle le conduit de sortie sur la colonne / tête de douche (8) ou le flexible sur la position de fermeture / vidange correspondant à la fonction de fermeture / vidange, le conduit de vidange (5.3) dans la cartouche est ouvert, de sorte que l'eau conservée dans la colonne / tête de douche (8) ou flexible de douche s'écoule par l'orifice de vidange (4) intégré dans le boîtier du robinet mélangeur (1).
